# EUROPÄISCHE PATENTSCHRIFT

(11) **EP 2 051 353 B1**
(45) Veröffentlichungstag und Bekanntmachung des Hinweises auf die Patenterteilung: **20.02.2019**
(21) Anmeldenummer: 08017113.5
(22) Anmeldetag: 29.09.2008
(51) Int. Cl.: H02K 7/06

(54) **Antriebseinheit**
Drive unit
Unité d'entraînement

(30) Priorität: 15.10.2007 DE 102007049272
(43) Veröffentlichungstag der Anmeldung: 22.04.2009
(73) Patentinhaber: Schaeffler Technologies AG & Co. KG, 91074 Herzogenaurach (DE)
(72) Erfinder: Mán, Lászlo, 77833 Ottersweier-Unzhurst (DE)

(56) Entgegenhaltungen:
- EP-A1- 0 799 672
- EP-A1- 1 363 382
- EP-A1- 1 693 947
- WO-A1-2005/050062
- WO-A1-2006/114265
- DE-A1-102004 009 832
- FR-A1- 2 888 553
- GB-A- 2 218 268
- JP-Y2- H 022 074

## Beschreibung

Die vorliegende Erfindung betrifft eine Antriebseinheit mit den Merkmalen der Oberbegriffe der Ansprüche 1 und 10.

Bei konventionellen Hebelaktoren, wie in der DE 10 2004 009 832 beschrieben, wird zum Antrieb ein EC-Motor verwendet. Sowohl dieser als auch die mittels eines Verbindungselements an ihn gekoppelte Getriebeeinheit bilden hierbei in sich geschlossene Module mit jeweils separater Lagerung.

Weiterhin ist bekannt, den Motor und die Getriebeeinheit als steckbares Modul mit einer gemeinsamen Spindelwelle auszuführen. Bei dieser Lösung hat sowohl der Elektromotor als auch die Getriebeeinheit eine separate Lagerung. Im Unterschied zur zusätzlichen Lagerung bei konventionellen Hebelaktoren werden hierbei die an der Getriebeeinheit in axialer Richtung zur Motordrehachse auftretenden Zug- und Druckkräfte bereits über den Motor durch Änderung der Größe der Motorlager bzw. dessen Aufhängung am Gehäuse abgestützt.

Allerdings führt die jeweils separate Lagerung von Motor- und Getriebeeinheit zu einer statischen Überbestimmtheit der Lagerung der Antriebseinheit, was deren erhöhte Bauteilbeanspruchung zur Folge hat.

Eine Weiterentwicklung dieser Antriebseinheit sieht vor, deren Lagerung an der Verbindungsstelle von Motor- und Getriebeeinheit vorzunehmen. Die Lagerung wird hierbei durch ein standardisiertes Festlager vorgenommen, dessen Lagerschalen einerseits in die gemeinsame Spindelwelle und andererseits in das Motorgehäuse eingepresst sind. Eine weitere Lagerstelle wird über eine an der Getriebeeinheit angeordnete Rolleneinheit realisiert.

Da dieses Festlager im Motorbereich auf der Spindelwelle angeordnet und damit vom Rotor umhüllt wird, vergrößert sich zwangsläufig der Außendurchmesser des Elektromotors, was bei einigen Kraftfahrzeugen zu Bauraumproblemen führt.

Daher besteht die Aufgabe der Erfindung darin, eine Antriebseinheit zum Antrieb eines Hebelsystems zur Betätigung einer Kupplung oder Getriebe-Bremse mit einer Lagerung zu schaffen, durch die der Außendurchmesser des E-Motors nicht vergrößert wird und eine konstante Größe des Luftspaltes zwischen Stator und Rotor gewährleistet ist.
Diese Aufgabe wird durch eine Antriebseinheit mit den Merkmalen des Anspruchs 1 und des Anspruchs 8 gelöst. Vorteilhafte Ausgestaltungen der Erfindung ergeben sich aus den Unteransprüchen.
Die Erfindung wird nachfolgend anhand eines Ausführungsbeispiels und zugehöriger Zeichnungen näher erläutert.
Es zeigen:
- Figur 1: eine Prinzipdarstellung einer Ausgestaltungsvariante einer Antriebseinheit im Schnitt,
- Figur 2: eine Prinzipdarstellung einer weiteren Ausgestaltungsvariante einer Antriebseinheit im Schnitt.

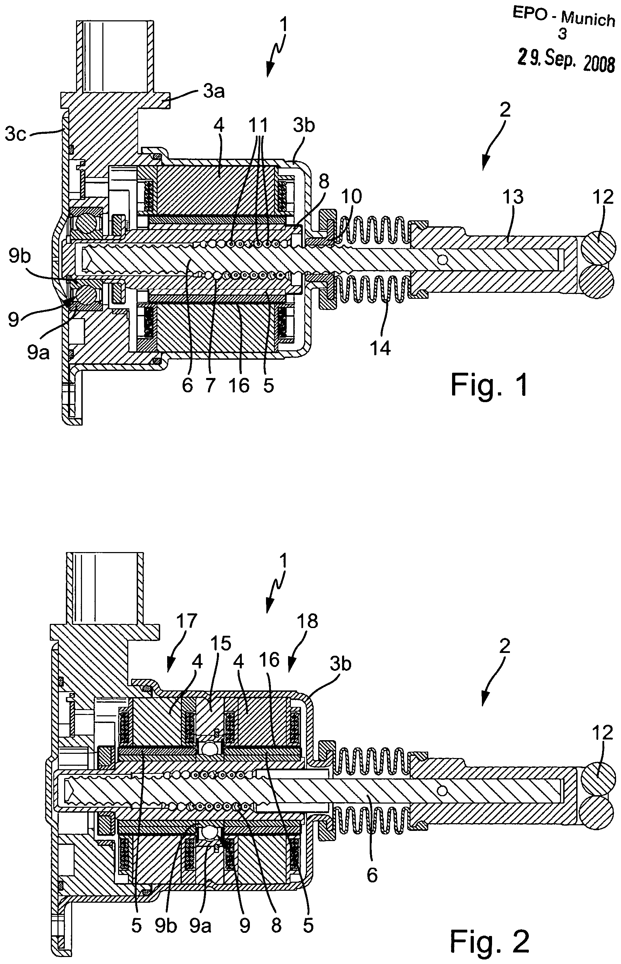

Figur 1 zeigt eine Prinzipdarstellung des Aufbaus einer erfindungsgemäßen Antriebseinheit im Schnitt. Diese Antriebseinheit setzt sich aus einer Motoreinheit 1 und einer Getriebeeinheit 2 zusammen, wobei als Motor ein Elektromotor verwendet wird. Motoreinheit 1 und Getriebeeinheit 2 sind über einen Kugelgewindetrieb 7 miteinander verbunden.
Dieser Kugelgewindetrieb 7 wird aus einer Kugelgewindetriebmutter 8 mit innenliegender Spindelwelle 6 gebildet. Auf der Spindelwelle 6 sind Kugeln 11 angeordnet, über die Spindelwelle 6 und Kugelgewindetriebmutter 8 miteinander in Wirkverbindung stehen.
Die Spindelwelle 6 fungiert dabei sowohl als Motorwelle als auch als Gewindetriebwelle.
Den Kern der Motoreinheit 1 bildet dabei bekanntermaßen ein Rotor 5, der von einem Stator 4 umgeben wird und somit ein Paket bildet.
Die Motoreinheit 1, die außerdem bereits erwähnten Elektromotor noch entsprechende Anschlüssen und Steuerelemente enthält, wird von einem Motorgehäuse 3 umhüllt, das sich aus den Teilen 3a, 3b und 3c zusammensetzt. So dient ein Sockel 3a zur Befestigung der gesamten Antriebseinheit beispielsweise an einer nicht dargestellten Kupplungsglocke. Auf der einen Stirnfläche des Sockels 3a sind Stator 4 und Rotor 5 durch einen Luftspalt 16 voneinander beabstandet angeordnet, die von einer topfförmigen Motorhaube 3b umhüllt werden. Der Boden der Motorhaube 3b ist dabei mit einer Aussparung zur Gewährleistung eines Durchganges für die Spindelwelle 6 versehen. Die andere Stirnfläche des Sockels 3a wird von einem Abschlussdeckel 3c verschlossen. Dieser Abschlussdeckel 3c dient hierbei als Schmutzschutz für die Motoreinheit 1.

Die Spindelwelle 6 durchdringt in axialer Richtung die konzentrische Aussparung des Bodens in der Motorhaube 3b, wobei sie an dieser Durchgangsstelle eine Axialführung 10 erfährt. Diese ist in diesem Beispiel in Form einer in die Motorhaube 3b eingesetzten Hülse ausgeführt. Mit ihrem über die Motorhaube 3b hinausragenden Ende steht die Spindelwelle 6 mit einem Wagen 13 in Verbindung, an dem eine Rolleneinheit 12 befestigt ist. Diese Rolleneinheit 12, die auf einen Hebelmechanismus zur Betätigung einer nicht dargestellten Kupplung oder Getriebebremse einwirkt, fungiert außerdem als Lagerstelle für die Antriebseinheit, die somit im Bereich der Getriebeeinheit 2 vorgesehen ist. Der zwischen der Axialführung 10 und dem Wagen 13 ungeschützte Bereich der Spindelwelle 6 wird mittels eines Faltenbalges 14 abgedeckt, so dass dadurch dieser Bereich vor Schmutzeinwirkung geschützt ist.

Die weitere Lagerstelle der Antriebseinheit (d.h. der Motor/Getriebeeinheit) der Motor-Getriebeeinheit befindet sich, wie aus Figur 1 ersichtlich, im Bereich der Motoreinheit 1. So wird die Kugelgewindetriebmutter 8, und damit auch die über die Kugeln 11 mit ihr wirkverbundene Spindelwelle 6, motorseitig über ein als Kugellager 9 ausgebildetes standardisiertes Festlager gelagert. Der Innenring 9b des Kugellagers 9 ist mit der Kugelgewindetriebmutter 8 axial formschlüssig verbunden und der Außenring 9a ist mit dem Sockel 3a verankert. Durch diese Anordnung des Kugellagers 9 im Bereich des Sockels 3a der Motoreinheit 1 und damit außerhalb des Kernstückes des Elektromotors, wird dessen Außendurchmesser nicht vergrößert. In Verbindung dieser Lagerstelle mit der vorgenannten Lagerstelle durch die Rolleneinheit 12 wird weiterhin gewährleistet, dass die Größe des Spaltes 16 zwischen Stator 4 und Rotor 5 konstant bleibt.

Bei Bestromung des Elektromotors versetzt der Rotor 5 die mit diesem kraftschlüssig verbundene Kugelgewindetriebmutter 8 ebenfalls in eine Drehbewegung, wodurch aufgrund der wirkenden Kräfte zwischen den Kugeln 11 und der Kugelgewindetriebmutter 8 die Spindelwelle 6 eine Längsbewegung ausführt. Je nach Bestromungsrichtung wird die Spindelwelle 6 somit aus der Motoreinheit 1 heraus oder in diese hinein bewegt, wodurch der Wagen 13 mit der Rolleneinheit 12 über eine vorgegebene Wegstrecke bewegt wird. Die Bewegung des Wagens 13 ist mit einem Pfeil Pf angedeutet.
Eine weitere Möglichkeit, die Antriebseinheit zu lagern, ohne dadurch den Außendurchmesser des Motors bzw. der Motoreinheit 1 zu vergrößern, wird in Figur 2 dargestellt. In dieser Figur 2 ist der wesentliche Aufbau der Antriebseinheit gleich der in Figur 1 dargestellten, so dass bei der Beschreibung der Figur 2 lediglich die Unterschiede zur Figur 1 herausgearbeitet werden. Für die Beschreibung von Figur 2 werden deshalb die Bezugszeichen aus Figur 1 für gleiche Bauteile beibehalten.
Im Unterschied zu dem in Figur 1 dargestellten Elektromotor wird in dieser Ausführung sowohl das aus Stator 4 und Rotor 5 bestehende Paket axial geteilt, so dass dadurch zwei Teilpakete 17, 18 entstanden sind, wobei jeweils zwischen Stator 4 und Rotor 5 ein Luftspalt 16 vorhanden ist.
Wie aus Figur 2 ersichtlich, wird im Raum zwischen beiden Teilpaketen 17, 18 das in dieser Ausführung ebenfalls als Kugellager 9 ausgebildete standardisierte Festlager angeordnet, dessen Innenring 9b axial formschlüssig mit der Kugelgewindetriebmutter 8 des Kugelgewindetriebes 7 verbunden ist.
Der Raum zwischen Motorhaube 3b und Außenring 9a des Kugellagers 9 wird von einem in der Motorhaube 3b lagefixierten Haltering 15 ausgefüllt. Mit diesem Haltering 15 ist der Außenring 9a des Kugellagers 9 formschlüssig verbunden.
Die weitere Lagerung der Antriebseinheit erfolgt wie in Figur 1 über die Rolleneinheit 12.
Durch dieses in den Figuren 1 und 2 dargestellte Lagerkonzept für die Antriebseinheit wird gewährleistet, dass in beiden Fällen der Durchmesser des Elektromotors und damit der vorhandene Bauraum in radialer Richtung nicht vergrößert werden muss, und außerdem der Luftspalt 16 zwischen Rotor 5 und Stator 4 nahezu konstant bleibt.

### Bezuaszeichenliste

- 1: Motoreinheit
- 2: Getriebeeinheit
- 3: Motorgehäuse
- 3a: Sockel
- 3b: Motorhaube
- 3c: Abschlussdeckel
- 4: Stator
- 5: Rotor
- 6: Spindelwelle
- 7: Kugelgewindetrieb
- 8: Kugelgewindetriebmutter
- 9: Lagerung/Kugellager
- 9a: Außenring
- 9b: Innenring
- 10: Axialführung
- 11: Kugel
- 12: Rolleneinheit
- 13: Wagen
- 14: Faltenbalg
- 15: Haltering
- 16: Luftspalt
- 17: Teilpaket
- 18: Teilpaket
- Pfeil: Pf Bewegungsrichtung

## Patentansprüche

1. Hebelmechanismus und Antriebseinheit, die aus einer Motoreinheit (1) mit einem Paket aus Stator (4) und innenliegendem Rotor (5), und einer mit einer an der Getriebeeinheit (2) befestigter Rolleneinheit (12) zur Einwirkung auf den Hebelmechanismus zur Betätigung einer Kupplung oder Getriebebremse in Wirkverbindung stehender Getriebeeinheit (2) gebildet wird, wobei die Motoreinheit (1) und die Getriebeeinheit (2) über einen Kugelgewindetrieb (7) miteinander verbunden sind und das Paket in zwei Teilpakete (17, 18) aufgeteilt ist, wobei eine jeweils alleinige Lagerung (9, 12) sowohl an der Motoreinheit (1) als auch an der Getriebeeinheit (2) erfolgt und die Getriebeeinheit (2) über die Rolleneinheit (12) gelagert ist, der Kugelgewindetrieb (7) aus einer Kugelgewindetriebmutter (8) mit innen liegender Spindelwelle (6) gebildet wird, die über die auf ihr angeordneten Kugeln (11) mit der Kugelgewindetriebmutter (8) in Wirkverbindung stehen, die Motoreinheit einen Elektromotor umfasst und je nach Bestromungsrichtung des Elektromotors die Spindelwelle (6) aus der Motoreinheit (1) heraus oder in diese hinein bewegt wird.

2. Hebelmechanismus und Antriebseinheit nach Anspruch 1, **dadurch gekennzeichnet, dass** die Lagerung (9) zwischen den Teilpaketen (17, 18) auf dem Kugelgewindetrieb (7) vorgesehen ist.

3. Hebelmechanismus und Antriebseinheit nach Anspruch 2, **dadurch gekennzeichnet, dass** die Lagerung (9) als Festlager ausgeführt ist.

4. Hebelmechanismus und Antriebseinheit nach Anspruch 2 und 3, **dadurch gekennzeichnet, dass** diese Lagerung (9) von einem Kugellager realisiert wird.

5. Hebelmechanismus und Antriebseinheit nach Anspruch 1, **dadurch gekennzeichnet, dass** die Teilpakete (17, 18) von einem lagefixierten Haltering (15) zueinander beabstandet werden.

6. Hebelmechanismus und Antriebseinheit nach Anspruch 1 und 4, **dadurch gekennzeichnet, dass** der Innenring (9b) des Kugellagers (9) mit der Kugelgewindetriebmutter (8) axial formschlüssig verbunden ist.

7. Hebelmechanismus und Antriebseinheit nach Anspruch 4 und 5, **dadurch gekennzeichnet, dass** der Außenring (9a) des Kugellagers (9) mit dem Haltering (15) axial formschlüssig verbunden ist.

8. Hebelmechanismus und Antriebseinheit, die aus einer Motoreinheit (1) mit einem Paket aus Stator (4) und innenliegendem Rotor (5), und einer mit einer an der Getriebeeineheit (2) befestigten Rolleneinheit (12) in Wirkverbindung stehender Getriebeeinheit (2) gebildet wird, wobei die Motoreinheit (1) und die Getriebeeinheit (2) über einen Kugelgewindetrieb (7) miteinander verbunden sind, und wobei eine jeweils alleinige Lagerung (9, 12) sowohl an der Motoreinheit (1) als auch an der Getriebeeinheit (2) erfolgt, die Lagerung (9) in der Motoreinheit (1) endseitig auf dem Kugelgewindetrieb (7) außerhalb des Paketes angeordnet ist, die Motoreinheit (1) von einem Motorgehäuse (3) umhüllt wird, die Getriebeinheit (2) alleine über die Rolleneinheit (12) gelagert ist und die Rolleneinheit (12) außerhalb des Motorgehäuses (3) entgegengesetzt der Lagerung (9) angeordnet ist, wobei der Kugelgewindetrieb (7) aus einer Kugelgewindetriebmutter (8) mit innen liegender Spindelwelle (6) gebildet wird, die über die auf ihr angeordneten Kugeln (11) mit der Kugelgewindetriebmutter (8) in Wirkverbindung stehen, die Motoreinheit einen Elektromotor umfasst und je nach Bestromungsrichtung des Elektromotors die Spindelwelle (6) aus der Motoreinheit (1) heraus oder in diese hinein bewegt wird.

9. Hebelmechanismus und Antriebseinheit nach Anspruch 8, **dadurch gekennzeichnet, dass** die Lagerung (9) aus einem Kugellager mit Innenring (9b) und Außenring (9a) gebildet wird.

10. Hebelmechanismus und Antriebseinheit nach Anspruch 8 und 9, **dadurch gekennzeichnet, dass** der Innenring (9b) des Kugellagers (9) mit der Kugelgewindetriebmutter (8) des Kugelgewindetriebes (7) axial formschlüssig verbunden ist.

11. Hebelmechanismus und Antriebseinheit nach Anspruch 8 und 9, **dadurch gekennzeichnet, dass** der Außenring (9a) des Kugellagers (9) mit der Motoreinheit (1) fest verbunden ist.

12. Hebelmechanismus und Antriebseinheit nach einem der Ansprüche 1 oder 8, **dadurch gekennzeichnet, dass** die Motoreinheit (1) von einem Motorgehäuse (3) umhüllt wird und das Motorgehäuse einen Sockel (3a) zur Befestigung der gesamten Antriebseinheit an einer Kupplungsglocke außerhalb des Paketes aufweist.

13. Hebelmechanismus und Antriebseinheit nach Anspruch 1 und 12, **dadurch gekennzeichnet, dass** die Rolleneinheit (12) außerhalb des Motorgehäuses (3) auf der dem Sockel (3a) entfernten Seite des Motorgehäuses (3) angeordnet ist.

## Claims

1. Lever mechanism and drive unit which is formed from a motor unit (1) with a package consisting of a stator (4) and an internal rotor (5), and from a gear unit (2) which is operatively connected to a roller unit (12) which is fastened to the gear unit (2) for acting on the lever mechanism in order to actuate a clutch or gear brake, the motor unit (1) and the gear unit (2) being connected to one another via a ball screw drive (7), and the package being divided into two part packages (17, 18), respective sole mounting (9, 12) taking place both on the motor unit (1) and on the gear unit (2), and the gear unit (2) being mounted via the roller unit (12), the ball screw drive (7) being formed from a ball screw drive nut (8) with an inner spindle shaft (6) which is operatively connected to the ball screw drive nut (8) via the balls (11) which are arranged on it, the motor unit comprising an electric motor, and the spindle shaft (6) being moved out of the motor unit (1) or into the latter depending on the energization direction of the electric motor.

2. Lever mechanism and drive unit according to Claim 1, **characterized in that** the mounting (9) is provided between the part packages (17, 18) on the ball screw drive (7).

3. Lever mechanism and drive unit according to Claim 2, **characterized in that** the mounting (9) is configured as a locating bearing.

4. Lever mechanism and drive unit according to Claims 2 and 3, **characterized in that** the said mounting (9) is realised by a ball bearing.

5. Lever mechanism and drive unit according to Claim 1, **characterized in that** the part packages (17, 18) are spaced apart from one another by a positionally fixed securing ring (15).

6. Lever mechanism and drive unit according to Claims 1 and 4, **characterized in that** the inner ring (9b) of the ball bearing (9) is connected in an axially positively locking manner to the ball screw drive nut (8).

7. Lever mechanism and drive unit according to Claims 4 and 5, **characterized in that** the outer ring (9a) of the ball bearing (9) is connected in an axially positively locking manner to the securing ring (15).

8. Lever mechanism and drive unit which is formed from a motor unit (1) having a package comprising a stator (4) and an internal rotor (5), and from a gear unit (2) which is operatively connected to a roller unit (12) which is fastened to the gear unit (2), the motor unit (1) and the gear unit (2) being connected to one another via a ball screw drive (7), and respective sole mounting (9, 12) taking place both on the motor unit (1) and on the gear unit (2), the mounting (9) in the motor unit (1) being arranged on the end side on the ball screw drive (7) outside the package, the motor unit (1) being encased by a motor housing (3), the gear unit (2) being mounted solely via the roller unit (12), and the roller unit (12) being arranged outside the motor housing (3) in an opposed manner with respect to the mounting (9), the ball screw drive (7) being formed from a ball screw drive nut (8) with an inner spindle shaft (6) which is operatively connected to the ball screw drive nut (8) via the balls (11) which are arranged on it, the motor unit comprising an electric motor and being moved out of the motor unit (1) or into the latter depending on the energization direction of the electric motor.

9. Lever mechanism and drive unit according to Claim 8, **characterized in that** the mounting (9) is formed from a ball bearing with an inner ring (9b) and an outer ring (9a).

10. Lever mechanism and drive unit according to Claims 8 and 9, **characterized in that** the inner ring (9b) of the ball bearing (9) is connected in an axially positively locking manner to the ball screw drive nut (8) of the ball screw drive (7).

11. Lever mechanism and drive unit according to Claims 8 and 9, **characterized in that** the outer ring (9a) of the ball bearing (9) is connected fixedly to the motor unit (1).

12. Lever mechanism and drive unit according to either of Claims 1 and 8, **characterized in that** the motor unit (1) is encased by a motor housing (3), and the motor housing has a base (3a) for fastening the entire drive unit to a clutch housing outside the package.

13. Lever mechanism and drive unit according to Claims 1 and 12, **characterized in that** the roller unit (12) is arranged outside the motor housing (3) on that side of the motor housing (3) which is remote from the base (3a).

## Revendications

1. Mécanisme de levier et unité d'entraînement qui est formée d'une unité motrice (1) avec un ensemble constitué d'un stator (4) et d'un rotor intérieur (5), et d'une unité de transmission (2) en liaison fonctionnelle avec une unité à rouleau (12) fixée à l'unité de transmission (2) pour agir sur le mécanisme de levier pour actionner un embrayage ou un frein de transmission, l'unité motrice (1) et l'unité de transmission (2) étant accouplées l'une à l'autre par le biais d'une vis d'entraînement à billes (7) et l'ensemble étant divisé en deux ensembles partiels (17, 18), un support sur palier unique respectif (9, 12) étant réalisé à la fois sur l'unité motrice (1) et sur l'unité de transmission (2), et l'unité de transmission (2) étant supportée par le biais de l'unité à rouleau (12), la vis d'entraînement à billes (7) étant formée d'un écrou de vis d'entraînement à billes (8) avec un arbre de broche intérieur (6) qui est en liaison fonctionnelle, par le biais des billes (11) disposées sur lui, avec l'écrou de vis d'entraînement à billes (8), l'unité motrice comprenant un moteur électrique et en fonction du sens d'alimentation électrique du moteur électrique, l'arbre de broche (6) étant déplacé hors de l'unité motrice (1) ou dans celle-ci.

2. Mécanisme de levier et unité d'entraînement selon la revendication 1, **caractérisés en ce que** le support sur palier (9) est prévu entre les ensembles partiels (17, 18) sur la vis d'entraînement à billes (7).

3. Mécanisme de levier et unité d'entraînement selon la revendication 2, **caractérisés en ce que** le support sur palier (9) est réalisé sous forme de palier fixe.

4. Mécanisme de levier et unité d'entraînement selon les revendications 2 et 3, **caractérisés en ce que** ce support sur palier (9) est réalisé par un roulement à billes.

5. Mécanisme de levier et unité d'entraînement selon la revendication 1, **caractérisés en ce que** les ensembles partiels (17, 18) sont espacés l'un de l'autre par une bague de retenue (15) en position fixe.

6. Mécanisme de levier et unité d'entraînement selon les revendications 1 et 4, **caractérisés en ce que** la bague interne (9b) du roulement à billes (9) est connectée axialement par engagement par correspondance de formes à l'écrou de vis d'entraînement à billes (8).

7. Mécanisme de levier et unité d'entraînement selon les revendications 4 et 5, **caractérisés en ce que** la bague externe (9a) du roulement à billes (9) est connectée axialement par engagement par correspondance de formes à la bague de retenue (15).

8. Mécanisme de levier et unité d'entraînement, qui est formée d'une unité motrice (1) avec un ensemble constitué d'un stator (4) et d'un rotor intérieur (5), et d'une unité de transmission (2) en liaison fonctionnelle avec une unité à rouleau (12) fixée à l'unité de transmission (2), l'unité motrice (1) et l'unité de transmission (2) étant accouplées l'une à l'autre par le biais d'une vis d'entraînement à billes (7) et un support sur palier unique respectif (9, 12) étant réalisé à la fois sur l'unité motrice (1) et sur l'unité de transmission (2), le support sur palier (9) étant disposé dans l'unité motrice (1) du côté de l'extrémité sur la vis d'entraînement à billes (7) à l'extérieur de l'ensemble, l'unité motrice (1) étant enveloppée par un carter moteur (3), l'unité de transmission (2) étant supportée à elle seule par le biais de l'unité à rouleau (12) et l'unité à rouleau (12) étant disposée à l'extérieur du carter moteur (3) à l'opposé du support sur palier (9), la vis d'entraînement à billes (7) étant formée d'un écrou de vis d'entraînement à billes (8) avec un arbre de broche intérieur (6) qui est en liaison fonctionnelle, par le biais des billes (11) disposées sur lui, avec l'écrou de vis d'entraînement à billes (8), l'unité motrice comprenant un moteur électrique et en fonction du sens d'alimentation électrique du moteur électrique, l'arbre de broche (6) étant déplacé hors de l'unité motrice (1) ou dans celle-ci.

9. Mécanisme de levier et unité d'entraînement selon la revendication 8, **caractérisés en ce que** le support sur palier (9) est formé d'un roulement à billes avec une bague interne (9b) et une bague externe (9a).

10. Mécanisme de levier et unité d'entraînement selon les revendications 8 et 9, **caractérisé en ce que** la bague interne (9b) du roulement à billes (9) est connectée axialement par engagement par correspondance de formes à l'écrou de vis d'entraînement à billes (8) de la vis d'entraînement à billes (7).

11. Mécanisme de levier et unité d'entraînement selon les revendications 8 et 9, **caractérisés en ce que** la bague externe (9a) du roulement à billes (9) est connectée fixement à l'unité motrice (1).

12. Mécanisme de levier et unité d'entraînement selon l'une quelconque des revendications 1 ou 8, **caractérisés en ce que** l'unité motrice (1) est enveloppée par un carter moteur (3) et le carter moteur présente un socle (3a) pour la fixation de l'ensemble de l'unité d'entraînement sur une cloche d'embrayage à l'extérieur de l'ensemble.

13. Mécanisme de levier et unité d'entraînement selon les revendications 1 et 12, **caractérisés en ce que** l'unité à rouleau (12) est disposée à l'extérieur du carter moteur (3) sur le côté du carter moteur (3) opposé au socle (3a).
